# FASCICULE DE BREVET EUROPEEN

(11) **EP 1 424 710 B1**
(45) Date de publication et mention de la délivrance du brevet: **17.05.2006**
(21) Numéro de dépôt: 03104333.4
(22) Date de dépôt: 24.11.2003
(51) Int. Cl.: H01H 25/04, H01H 25/00, H01H 25/06, H01H 15/10, E05F 15/10, B60N 2/00, G05G 13/02

(54) **Dispositif de commande d'au moins deux fonctions d'un organe et/ ou d'au moins deux parties distinctes d'un organe**
Steuervorrichtung für wenigstens zwei Funktionen eines Elementes und/oder wenigstens zwei verschiedener Elementteile
Control device for at least two functions of an element and/or at least two different parts of an element

(30) Priorité: 22.11.2002 FR 0214647
(43) Date de publication de la demande: 02.06.2004
(73) Titulaire: DAV, 78180 Montigny le Bretonneux (FR)
(72) Inventeur: Tissot, Jean Marc c/o DAV, 74106 Annemasse (FR); Lebreton, Etienne c/o DAV, 74106 Annemasse (FR)
(74) Mandataire: Croonenbroek, Thomas Jakob

(56) Documents cités:
- DE-A- 3 129 422
- DE-A- 3 910 977
- DE-A- 10 060 396
- DE-A- 19 936 257
- FR-A- 2 737 686
- GB-A- 2 036 434
- US-A- 5 864 105
- US-A- 5 889 507
- US-A1- 2003 196 880

## Description

La présente invention concerne un procédé de commande d'au moins deux fonctions d'un organe et/ou d'au moins deux parties distinctes d'un organe et un dispositif de commande permettant la mise en oeuvre de ce procédé. Plus particulièrement, la présente invention concerne un procédé et un dispositif de commande de la position et de l'articulation des différentes parties d'un siège de véhicule automobile et un dispositif de commande de l'ouverture et de la fermeture d'au moins un ouvrant de véhicule automobile.

En général, chaque fonction d'un organe quel qu'il soit est commandée par un bouton levier ou autre spécifiquement dédié à cette fonction. Il en résulte une multiplication du nombre de boutons ou leviers de commande ce qui, notamment dans le domaine de l'automobile, peut s'avérer gênant. En effet, d'une part ces nombreux dispositifs de commande occupent une place grandissante tant sur le tableau de bord que sur les autres parties du véhicule et d'autre part, leur maniement n'est souvent pas aisé, en particulier lorsque l'utilisateur conduit. Il s'avère difficile de commander en aveugle une fonction de manière intuitive c'est-à-dire, par exemple, sans avoir à regarder l'emplacement du bouton commandant la fonction dont il a besoin. Le document DE 19936257 montre le préambule de la revendication 1.

Le but de la présente invention est de proposer un dispositif de commande d'au moins deux fonctions d'un organe et/ou d'au moins deux parties d'un organe qui pallient tout ou partie des inconvénients précités.

Ce but est atteint au moyen d'un procédé de commande d'au moins deux fonctions d'un organe et/ou d'au moins deux parties distinctes dudit organe au moyen d'un dispositif de commande qui comporte au moins un élément commutant mobile. De manière caractéristique, selon l'invention, le dispositif comportant au moins une zone tactile équipée de moyens de reconnaissance de toucher, on exerce une première action tactile sur une première zone tactile du dispositif de commande en sorte d'activer une première fonction de l'organe ou une première partie de cet organe et on entraine en mouvement l'élément commutant mobile pour contrôler cette première fonction ; on exerce ensuite une seconde action tactile soit sur une seconde zone tactile soit sur une zone de l'élément commutant mobile non équipée de moyens de reconnaissance de toucher en sorte d'activer une seconde fonction et on entraîne en mouvement l'élément mobile pour contrôler cette seconde fonction.

Dans le cadre de la présente invention, on désigne par le terme « action tactile » toute action de préhension, de toucher ou d'effleurement exercée par l'utilisateur sur la zone tactile.

De même, selon l'invention, les moyens de reconnaissance de toucher ne sont pas limités. Ils peuvent être, par exemple, de type résistif, capacitif optique ou autre.

Dans le cadre de la présente invention, le terme « fonction » désigne, par exemple, le mouvement, le changement d'état d'un organe ou d'une partie de cet organe ou l'activation d'un autre organe ou dispositif.

De même, on entend par le terme « organe » toute pièce mécanique ou ensemble de pièces mécaniques susceptibles d'être commandées, notamment de manière séparée.

Le procédé de l'invention permet donc de commander deux fonctions d'un organe et/ou la fonction de deux parties distinctes de l'organe au moyen d'un seul et même élément commutant mobile, les moyens de reconnaissance de toucher permettant de choisir la fonction qui doit être activée avant de pouvoir être commandée. La première fonction peut également être directement commandée par l'élément commutant, sans devoir être activée auparavant ; l'autre ou les autres fonctions, par contre, doivent être activées par les moyens de reconnaissance de toucher avant de pouvoir être commandées par déplacement de l'élément commutant.

La présente invention concerne également un dispositif de commande comportant un élément commutant mobile qui, de manière caractéristique comporte au moins une zone tactile équipée de moyens de reconnaissance de toucher, des moyens d'activation d'une fonction de l'organe ou d'une partie de cet organe couplés aux moyens de reconnaissance de toucher et des moyens permettant de contrôler la fonction activée par déplacement de l'élément commutant mobile.

La disposition des zones tactiles n'est pas limitée selon l'invention. Ainsi, il est possible selon l'invention d'exercer la première action tactile sur une zone distante de l'élément commutant. De manière avantageuse, l'élément commutant mobile comprend au moins une zone tactile ce qui permet de faciliter l'utilisation du dispositif de l'invention, la première action tactile et l'entraînement en mouvement de l'élément commutant mobile pouvant être mis en oeuvre de manière quasi simultanée et instinctive.

Le mouvement de l'élément commutant mobile n'est pas limité selon l'invention. Selon un premier mode de réalisation, l'élément commutant est mobile en rotation autour d'un axe et en translation dans le plan normal audit axe.

L'élément commutant mobile peut ainsi comprendre une rotule sensiblement symétrique par rapport à l'axe de rotation et qui comporte à sa surface au moins une zone tactile.

Selon une variante, l'élément commutant mobile comprend deux parties mobiles en translation l'une par rapport à l'autre, au moins une zone tactile étant rendue accessible au toucher par translation des parties l'une par rapport à l'autre.

Selon un second mode de réalisation, l'élément commutant est mobile en translation dans un plan.

Selon ce second mode de réalisation, le dispositif de l'invention peut comprendre, par exemple, un socle dans lequel coulisse l'élément commutant qui comporte une palette comportant au moins une zone tactile.

Lorsque au moins une des zones tactiles est disposée sur l'élément commutant, cette zone comporte, de manière avantageuse des moyens pour entraîner en mouvement l'élément commutant. Ces moyens ne sont pas limités selon l'invention.

Il peut s'agir par exemple, d'une surface en matériau anti dérapant recouvrant tout ou partie de la zone tactile ou d'une ou plusieurs protubérances ou parties en creux qui permettent également de localiser facilement, visuellement et de manière tactile, la zone tactile.

Le dispositif de la présente invention peut être utilisé, par exemple, dans le domaine de l'industrie automobile pour commander l'ouverture et la fermeture d'au moins un ouvrant, tel que, par exemple, une vitre ou pour commander l'articulation des diverses parties d'un siège de véhicule automobile.

La présente invention, ses caractéristiques et les divers avantages qu'elle procure apparaîtront mieux à la lecture de la description qui suit de deux modes de réalisation particuliers de la présente invention et qui fait référence aux dessins annexés sur lesquels :
- la figure 1 représente une vue en perspective d'un premier mode de réalisation du dispositif de la présente invention ;
- les figures 2a et 2b représentent une vue en perspective de deux états d'une variante de réalisation du premier mode de réalisation du dispositif de la présente invention représenté sur la figure 1 ; et
- la figure 3 représente une vue en perspective d'un second mode de réalisation du dispositif de la présente invention.

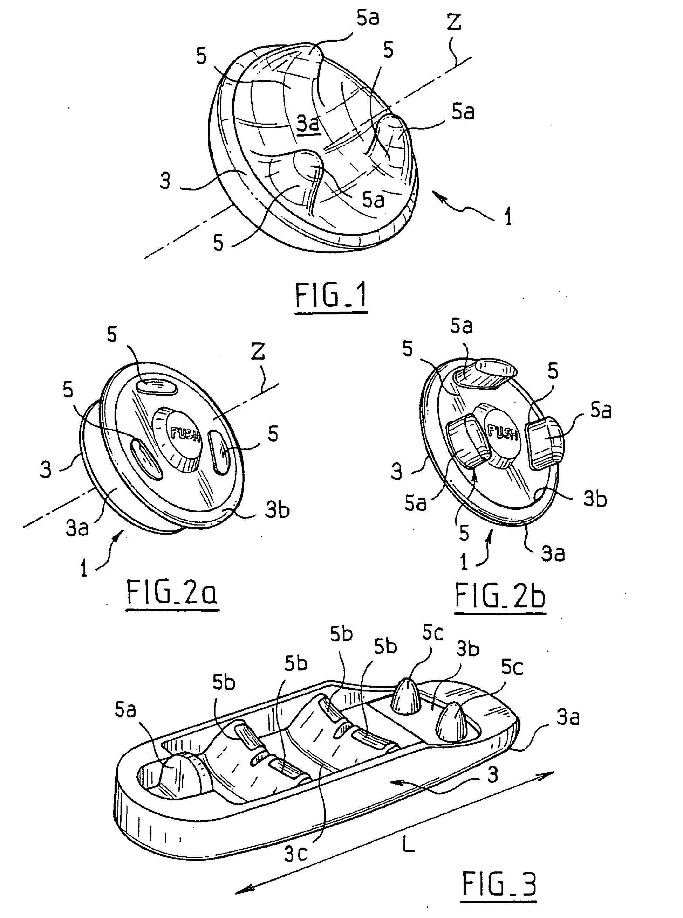

En référence à la figure 1, le premier mode de réalisation du dispositif 1 de l'invention comporte une rotule 3 (couramment appelée "joystick") qui fait office d'élément commutant mobile et qui permet, par son déplacement, de contrôler toutes les fonctions. La rotule 3 est sensiblement symétrique par rapport à l'axe Z et mobile en rotation instable de quelques degrés autour de l'axe Z. Elle est également mobile en translation instable dans le plan normal à l'axe Z. Les zones tactiles 5 qui sont disposées sur la surface libre 3a de la rotule 3 comportent chacune une partie de préhension, une protubérance 5a. Ces protubérances 5a permettent à la fois de localiser la zone tactile 5 et comme ultérieurement expliqué, d'entraîner en mouvement l'élément commutant 3.

En variante non représentée, la partie de préhension est réalisée sous forme d'une partie en creux.

Les zones tactiles 5 sont chacune équipées de moyens de reconnaissance de toucher non représentés. La forme, le nombre et la disposition des protubérances 5a ne sont pas limités selon l'invention. Le nombre de protubérances 5a dépend du nombre de fonctions et ou de parties de l'organe à commander.

A titre d'exemple, les moyens de reconnaissance de toucher comportent un capteur capacitif. Dans ce genre de capteur, la capacité d'un condensateur de test change lorsqu'une main d'un utilisateur s'approche ou touche de l'élément de commande. Lorsqu'un tel changement de la capacité est détecté, il est associé au fait que l'utilisateur s'est approché ou a touché l'élément de commande.

Selon un perfectionnement, la rotule est réalisée en matière plastique, préférentiellement une matière pouvant être revêtu d'une peinture, métallisée ou non. Elle présente sous sa face destinée à être en contact avec l'utilisateur un ou des logements pour recevoir la ou les partie (s) du capteur destiné à changer de capacité en cas de toucher par un utilisateur, cette partie pouvant être à titre d'exemple une antenne.

Par ailleurs, on peut prévoir avantageusement un seul capteur capacitif présentant autant d'antennes de détection que de nombre de zones tactiles, chaque antenne générant un signal caractéristique (une signature) en cas de détection d'un contact tactile de sorte que l'on peut utiliser pour le capteur capacitif un seul circuit de traitement des signaux des antennes et ainsi réduire le coût et l'encombrement du dispositif selon l'invention.

En variante, les moyens de reconnaissance de toucher comportent un capteur optique, fonctionnant par exemple sur un principe émission - réflexion. De préférence, la zone de l'élément de commande destiné à être touchée présente une fenêtre de réflexion de la lumière émis par un émetteur de lumière vers un récepteur (une photodiode). Le fait de toucher cette fenêtre de détection va modifier ses propriétés de réflexion et permet donc de détecter le toucher d'un utilisateur. Avantageusement, la lumière émise se trouve dans le visible et la fenêtre possède une forme caractéristique de manière que la lumière émise sert en même temps de rétro éclairage de l'élément de commande. Afin de prendre en compte les variations de changement de la lumière du jour, il est prévu un circuit permettant de filtrer cette contribution pour éviter des commandes intempestives.

Avantageusement, il est prévu un moyen de signalisation sonore de la reconnaissance du toucher par un utilisateur.

En outre, le dispositif comporte des moyens d'évaluation (non représentés) reliés d'une part à l'élément commutant mobile pour évaluer la position de l'élément commutant et d'autre part à la ou auxdites zones tactiles pour détecter un état, touché ou non, de l'ensemble desdites zones tactiles et des moyens de discrimination pour délivrer un signal spécifique de sortie de commande en fonction d'une part de la position de l'élément commutant mobile et d'autre part de l'état détecté desdites zones tactiles.

Cette disposition est particulièrement avantageuse, car elle permet non seulement que l'on puisse commander par toucher une seule fonction par zone tactile, mais de commander une fonction spécifique lorsque l'on détecte une combinaison de zones tactiles touchées.

Ainsi, on peut prévoir deux protubérances présentant des zones tactiles dont chacune touchée seule permet de commander respectivement les rétroviseurs externes droite et gauche du véhicule, alors que le fait de toucher avec deux doigts les deux protubérances à la fois permet de commander encore une autre, nouvelle fonction, par exemple la mise en marche du dégivrage des deux rétroviseurs.

Le fonctionnement de ce premier mode de réalisation du dispositif de l'invention va maintenant être décrit, dans le cas de la commande des fonctions d'un siège de véhicule automobile. Lorsque seul l'élément mobile 3 est touché ou lorsque deux protubérances 5a ou plus sont touchées ou lorsque l'élément 3 et au moins une protubérance sont touchés, les fonctions principales du siège sont activées. C'est-à-dire que les mouvements de l'élément mobile 3 commandent à la fois le déplacement en translation parallèlement au plancher du véhicule et perpendiculairement à ce dernier de l'assise du siège et l'inclinaison du dossier du siège. L'utilisateur qui est assis sur le siège peut avoir un retour d'information purement kinesthésique, il règle alors la position du siège en fonction de ce qu'il ressent et il n'a donc pas besoin d'utiliser sa vue. Il peut également y avoir affichage sur un écran ou un afficheur d'un schéma de l'organe (le siège) et indication de la partie commandée. D'autres types de retour d'information ne sont pas exclus selon l'invention. En particulier, la partie commandée peut vibrer ou émettre un son. Dans le cas d'un retour d'information purement kinesthésique, le réglage des fonctions principales peut donc se faire en conduisant.

Chacune des protubérances 5a commande une fonction dite « avancée » du siège. Ces « fonctions avancées » correspondent notamment à la translation verticale de l'appui tête du siège, à l'articulation du siège au niveau des vertèbres lombaires et à l'articulation de la partie avant de l'assise du siège. Lorsqu'une protubérance 5a est touchée / saisie par des doigts, les moyens de reconnaissance de toucher qui l'équipent étant couplés à des moyens d'activation d'une fonction spécifique, cette fonction est activée. Le déplacement de l'élément commutant mobile 3, au moyen de la protubérance 5a touchée / saisie, qui intervient au moment ou juste après le toucher de cette dernière, permet de commander la fonction gouvernée par la protubérance 5a en question.

Dans ce cas aussi, le retour d'information peut être purement kinesthésique et le réglage peut donc se faire en aveugle pendant la conduite. Les retours d'information précités peuvent également être mis en oeuvre dans ce cas.

La variante de réalisation de la présente invention représentée sur les figures 2a et 2b comporte un élément commutant mobile 3 qui comporte une première partie 3a montée en rotule sur un élément du véhicule et une seconde partie 3b mobile en translation selon l'axe Z qui correspond sensiblement à l'axe de symétrie de l'élément commutant mobile 3. La première partie 3a correspond à la rotule 3 décrite dans le premier mode de réalisation et comprend des saillies 5a dont les côtés forment des zones tactiles. Les mouvements de cette première partie 3a sont identiques à ceux décrits dans le cas de cette rotule (translations et rotation instables). La seconde partie 3b est conformée en disque muni d'orifices destinés au passage des saillies 5a, lesquelles sont par exemple à contour cylindrique de base quelconque pour permettre le coulissement relatif des parties 3a et 3b. Le disque 3b peut occuper par coulissement deux positions, l'une, avancée (figure 2a) où il masque les côtés des saillies 5a, et l'autre, enfoncée, où il laisse ces côtés des saillies 5a dégagés et accessibles à l'utilisateur. Autrement dit, lorsque la partie 3b est en première position, avancée, éloignée de la surface principale de la première partie 3a, les zones tactiles 5 sont inaccessibles au toucher. Lorsque la seconde partie 3b est enfoncée sur la première partie 3a (figure 2b), les protubérances 5a qui matérialisent les zones tactiles 5 sont alors apparentes et le déplacement du premier élément 3 peut s'effectuer au moyen d'une des protubérances 5a.

Le fonctionnement de cette variante de réalisation de l'invention va maintenant être décrit dans le cas du réglage des différentes parties d'un siège de véhicule automobile. Lorsque la seconde partie 3b de l'élément mobile commutant 3 est séparée de la première partie 3a, seules les commandes principales peuvent être activées via le déplacement global de la première partie 3a, l'ensemble formé par les deux parties 3a et 3b étant pris en main par l'utilisateur. Lorsque les deux parties 3a et 3b sont rapprochées par coulissement, alors les « fonctions avancées » peuvent être activées via le toucher et/ou la préhension d'une des protubérances 5a. Les moyens d'activation, qui sont couplés aux moyens de reconnaissance de toucher de la protubérance 5a touchée, activent la fonction liée à cette protubérance 5a. La commande de cette fonction est mise en oeuvre par le déplacement de la première partie 3a sur laquelle est superposée la seconde partie 3b, au moyen de la protubérance 5a touchée.

L'élément commutant 3 comportant deux parties mobiles 3a et 3b, il permet à l'utilisateur de comprendre, facilement et sans avoir à regarder le dispositif de commande, à quelles fonctions, « principales » ou « avancées », il a directement accès.

En référence à la figure 3, selon un second mode de réalisation, le dispositif de commande de l'invention comporte un socle 3 dont une face 3a est solidaire d'un élément du véhicule et dont l'autre face 3b comporte une palette mobile 3c. Cette palette 3c est mobile en translation selon la longueur L du socle 3. La palette mobile 3c qui fait office d'élément commutant comporte à sa surface plusieurs zones tactiles matérialisées par des protubérances équipées chacune de moyens de reconnaissance de toucher non représentés. Dans le cas présent, la palette 3c comporte une protubérance 5a commandant l'ouverture et la fermeture simultanée des quatre vitres du véhicule, quatre protubérances 5b qui commandent l'ouverture d'une vitre particulière du véhicule et deux protubérances 5c qui commandent l'orientation des rétroviseurs du véhicule. Toutes les protubérances précitées permettent à l'utilisateur d'entraîner en mouvement la palette mobile 3c.

Le fonctionnement de ce second mode de réalisation est le suivant. Lorsqu'une des protubérances précitées est touchée, les moyens de reconnaissance de toucher équipant cette protubérance perçoivent que la protubérance est touchée et la fonction commandée par cette protubérance est activée via les moyens d'activation couplés aux moyens de reconnaissance de toucher. Le déplacement en translation instable de la palette mobile 3c au moyen de la protubérance touchée permet alors la commande de la fonction en question, en l'occurrence, par exemple, l'ouverture des vitres ou d'une vitre du véhicule ou le réglage de l'orientation des rétroviseurs du véhicule.

Le dispositif de commande de la présente invention permet donc de regrouper en un seul dispositif de commande le contrôle de plusieurs fonctions d'un même organe ou de plusieurs organes. Le déplacement d'un seul élément commutant mobile permet de contrôler diverses fonctions du fait de son association avec des moyens de reconnaissance de toucher équipant des zones spécifiques, chacune dédiée à la commande d'une fonction particulière de l'organe ou d'une partie de l'organe.

Le dispositif de l'invention permet donc de réduire la surface occupée par la commande et facilite la commande de toutes ces fonctions notamment en aveugle car l'utilisateur n'a à mémoriser qu'un nombre de déplacements limités, ceux de l'élément mobile commutant. Le réglage des différentes fonctions est donc facilité et plus rapide.

Par ailleurs, le contrôle des fonctions étant mis en oeuvre par l'élément mobile commutant, il est facile de moduler le nombre de zones tactiles équipant, par exemple, cet élément selon le nombre de fonctions à commander. Le coût de fabrication du dispositif de l'invention peut donc ainsi être optimisé.

Le mouvement de l'élément commutant n'est plus limité à un basculement ce qui autorise de nouveaux agencements.

## Revendications

1. Dispositif de commande (1) comportant un élément commutant mobile (3 ; 3a, 3b ; 3c) comportant :
- des zones tactiles (5) équipées de moyens de reconnaissance de toucher ;
- des moyens d'activation d'une première fonction d'un organe ou d'une partie dudit organe couplés auxdits moyens de reconnaissance de toucher ; et
- des moyens permettant de contrôler ladite première fonction activée, par déplacement dudit élément commutant mobile (3 ; 3a, 3b ; 3c), dans lequel
une au moins desdites zones tactiles comporte une partie de préhension pour déplacer l'élément commutant mobile de manière à ce que la fonction activée par le touché de la zone tactile soit contrôlée par le déplacement de l'élément commutant, **caractérisé en ce que** les moyens de reconnaissance du toucher comportent un capteur capacitif présentant autant d'antennes de détection qu'il y a de nombre de zones tactiles, chaque antenne générant un signal caractéristique, une signature, en cas de détection d'un contact tactile pour permettre de localiser la zone tactile touchée.

2. Dispositif de commande (1) selon la revendication 1, **caractérisé en ce que** la partie de préhension comprend une protubérance.

3. Dispositif de commande (1) selon la revendication 1, **caractérisé en ce que** la partie de préhension comprend une partie en creux.

4. Dispositif de commande (1) selon l'une quelconque des revendications 1 à 3, **caractérisé en ce que** chaque zone tactile comporte une partie de préhension permettant l'entraînement en mouvement de l'élément commutant mobile.

5. Dispositif de commande (1) selon l'une quelconque des revendications 1 à 4, **caractérisé en ce qu'**il comporte des moyens d'évaluation reliés d'une part à l'élément commutant mobile pour évaluer la position de l'élément commutant et d'autre part à la ou auxdites zones tactiles pour détecter un état, touché ou non, de l'ensemble desdites zones tactiles et des moyens de discrimination pour délivrer un signal spécifique de sortie de commande en fonction d'une part de la position de l'élément commutant mobile et d'autre part de l'état détecté desdites zones tactiles.

6. Dispositif de commande (1) selon l'une quelconque des revendications 1 à 5, **caractérisé en ce que** ledit élément commutant mobile (3 ; 3a, 3b ; 3c) comprend au moins une zone tactile (5).

7. Dispositif de commande (1) selon l'une quelconque des revendications 1 à 6, **caractérisé en ce que** ledit élément commutant (3 ; 3a, 3b ; 3c) est mobile en rotation autour d'un axe (Z) et en translation dans le plan normal audit axe (Z).

8. Dispositif de commande (1) selon la revendication 7, **caractérisé en ce que** ledit élément commutant mobile comprend une rotule (3) sensiblement symétrique par rapport audit axe (Z) et qui comporte, à sa surface (3a) au moins une zone tactile (5).

9. Dispositif de commande (1) selon la revendication 8, **caractérisé en ce que** ledit élément commutant (3 ; 3a, 3b ; 3c) comporte deux parties (3a, 3b) mobiles en translation l'une par rapport à l'autre, au moins une desdites zones tactiles (5) étant rendue accessible au toucher par translation desdites parties (3a, 3b) l'une par rapport à l'autre.

10. Dispositif de commande (1) selon l'une quelconque des revendications 1 à 9, **caractérisé en ce que** ledit élément commutant (3c) est mobile en translation dans un plan.

11. Dispositif de commande (1) selon la revendication 10, **caractérisé en ce qu'**il comporte un socle dans lequel coulisse ledit élément commutant qui comporte une palette (3c), ladite palette (3c) comportant au moins une zone tactile.

12. Dispositif de commande (1) selon l'une quelconque des revendications 1 à 11, **caractérisé en ce qu'**il réalisé de manière à pouvoir commander l'ouverture et la fermeture d'au moins deux ouvrants d'un véhicule automobile.

13. Dispositif de commande (1) selon l'une quelconque des revendications 1 à 12, **caractérisé en ce qu'**il est réalisé de manière à pouvoir commander l'articulation des différentes parties d'un siège de véhicule automobile.

## Claims

1. Control device (1) comprising a mobile switching element (3; 3a, 3b; 3c) comprising:
- tactile areas (5) equipped with touch recognition means;
- means of activating a first function of a member or part of said member coupled with said touch recognition means; and
- means making it possible to control said activated first function, by movement of said mobile switching element (3; 3a, 3b; 3c), in which
at least one of said tactile areas comprises a gripping part for moving the mobile switching element so that the function activated by touching the tactile area is controlled by the movement of the switching element, **characterised in that** the touch recognition means comprise a capacitive sensor having as many detection antennas as there are tactile areas, each antenna generating a characteristic signal, a signature, in the event of detection of a tactile contact in order to make it possible to locate the tactile area touched.

2. Control device (1) according to Claim 1, **characterised in that** the gripping part comprises a protuberance.

3. Control device (1) according to Claim 1, **characterised in that** the gripping part comprises a hollow part.

4. Control device (1) according to any one of Claims 1 to 3, **characterised in that** each tactile area comprises a gripping part allowing the mobile switching element to be set in motion.

5. Control device (1) according to any one of Claims 1 to 4, **characterised in that** it comprises evaluation means connected on the one hand to the mobile switching element in order to evaluate the position of the switching element and on the other hand to said tactile area or areas in order to detect a state, touched or not, of all said tactile areas and discrimination means for issuing a specific control output signal according to on the one hand the position of the mobile switching element and on the other hand the detected state of said tactile areas.

6. Control device (1) according to any one of Claims 1 to 5, **characterised in that** said mobile switching element (3; 3a, 3b; 3c) comprises at least one tactile area (5).

7. Control device (1) according to any one of Claims 1 to 6, **characterised in that** said switching element (3; 3a, 3b; 3c) is mobile in rotation about an axis (Z) and in translation in the plane normal to said axis (Z).

8. Control device (1) according to Claim 7, **characterised in that** said mobile switching element comprises a pivot joint (3) substantially symmetrical with respect to said axis (Z) and which comprises on its surface (3a) at least one tactile area (5).

9. Control device (1) according to Claim 8, **characterised in that** said switching element (3; 3a, 3b; 3c) comprises two parts (3a, 3b) mobile in translation with respect to each other, at least one of said tactile areas (5) being made accessible to the touch by translational movement of said parts (3a, 3b) with respect to each other.

10. Control device (1) according to any one of Claims 1 to 9, **characterised in that** said switching element (3c) is mobile in translation in one plane.

11. Control device (1) according to Claim 10, **characterised in that** it comprises a base in which said switching element, which comprises a blade (3c), said blade (3c) comprising at least one tactile area, slides.

12. Control device (1) according to any one of Claims 1 to 11, **characterised in that** it is implemented so as to be able to control the opening and closing of at least two opening members of a motor vehicle.

13. Control device (1) according to any one of Claims 1 to 12, **characterised in that** it is implemented so as to be able to control the articulation of the different parts of a motor vehicle seat.

## Patentansprüche

1. Steuervorrichtung (1) mit einem beweglichen Schaltelement (3; 3a, 3b; 3c), enthaltend:
- berührungssensitive Bereiche (5), die mit Berührungserkennungsmitteln ausgestattet sind,
- Mittel zum Aktivieren einer ersten Funktion eines Organs bzw. eines Teils dieses Organs, die mit den Berührungserkennungsmitteln gekoppelt sind, und
- Mittel, mit denen die aktivierte erste Funktion durch Verstellung des beweglichen Schaltelements (3; 3a, 3b; 3c) gesteuert werden kann, wobei
zumindest einer der berührungssensitiven Bereiche einen Greifabschnitt enthält, um das bewegliche Schaltelement so zu verstellen, dass die durch Berührung des berührungssensitiven Bereichs aktivierte Funktion durch Verstellung des Schaltelements gesteuert wird, **dadurch gekennzeichnet, dass** die Berührungserkennungsmittel einen kapazitiven Sensor enthalten, der ebenso viele Erfassungsantennen aufweist wie zahlenmäßig berührungssensitive Bereiche vorhanden sind, wobei jede Antenne ein Kennsignal, eine Kennzeichnung bei Erfassung eines Berührungskontakts ausgibt, um diesen berührten berührungssensitiven Bereich lokalisieren zu können.

2. Steuervorrichtung (1) nach Anspruch 1, **dadurch gekennzeichnet, dass** der Greifabschnitt einen Vorsprung enthält.

3. Steuervorrichtung (1) nach Anspruch 1, **dadurch gekennzeichnet, dass** der Greifabschnitt einen hohl ausgeführten Teil enthält.

4. Steuervorrichtung (1) nach einem der Ansprüche 1 bis 3, **dadurch gekennzeichnet, dass** jeder berührungssensitive Bereich einen Greifabschnitt enthält, der die Bewegungsmitnahme des beweglichen Schaltelements gestattet.

5. Steuervorrichtung (1) nach einem der Ansprüche 1 bis 4, **dadurch gekennzeichnet, dass** sie Auswertemittel enthält, die einerseits mit dem beweglichen Schaltelement verbunden sind, um die Stellung des Schaltelements auszuwerten, und andererseits mit dem bzw. den berührungssensitiven Bereichen verbunden sind, um einen Berührungszustand bzw. Nichtberührungszustand der gesamten berührungssensitiven Bereiche zu erfassen, sowie Diskriminierungsmittel, um ein spezifisches Steuerausgangssignal in Abhängigkeit von der Stellung des beweglichen Schaltelements einerseits und von dem erfassten Zustand der berührungssensitiven Bereiche andererseits auszugeben.

6. Steuervorrichtung (1) nach einem der Ansprüche 1 bis 5, **dadurch gekennzeichnet, dass** das bewegliche Schaltelement (3; 3a, 3b; 3c) zumindest einen berührungssensitiven Bereich (5) enthält.

7. Steuervorrichtung (1) nach einem der Ansprüche 1 bis 6, **dadurch gekennzeichnet, dass** das bewegliche Schaltelement (3; 3a, 3b; 3c) um eine Achse (Z) drehbar und in der zur Achse (Z) normalen Ebene verschiebbar ist.

8. Steuervorrichtung (1) nach Anspruch 7, **dadurch gekennzeichnet, dass** das bewegliche Schaltelement ein Kugelgelenk (3) enthält, das im wesentlichen symmetrisch zur Achse (Z) verläuft und an seiner Oberfläche (3a) zumindest einen berührungssensitiven Bereich (5) enthält.

9. Steuervorrichtung (1) nach Anspruch 8, **dadurch gekennzeichnet, dass** das Schaltelement (3; 3a, 3b; 3c) zwei zueinander verschiebbare Teile (3a, 3b) enthält, wobei zumindest einer der berührungssensitiven Bereiche (5) durch gegenseitiges Verschieben der Teile (3a, 3b) für die Berührung zugänglich ist.

10. Steuervorrichtung (1) nach einem der Ansprüche 1 bis 9, **dadurch gekennzeichnet, dass** das Schaltelement (3c) in einer Ebene verschiebbar ist.

11. Steuervorrichtung (1) nach Anspruch 10, **dadurch gekennzeichnet, dass** sie einen Sockel enthält, in welchem das Schaltelement gleitet, der eine Platte (3c) enthält, wobei die Platte (3c) zumindest einen berührungssensitiven Bereich aufweist.

12. Steuervorrichtung (1) nach einem der Ansprüche 1 bis 11, **dadurch gekennzeichnet, dass** sie so ausgebildet ist, dass sie das Öffnen und Schließen von zumindest zwei zu öffnenden Teilen eines Kraftfahrzeugs steuern kann.

13. Steuervorrichtung (1) nach einem der Ansprüche 1 bis 12, **dadurch gekennzeichnet, dass** sie so ausgebildet ist, dass sie die Anlenkung der verschiedenen Teile eines Kraftfahrzeugsitzes steuern kann.
